# EUROPEAN PATENT APPLICATION

(11) **EP 1 441 453 A1**
(43) Date of publication of application: **28.07.2004**
(21) Application number: 03290193.6
(22) Date of filing: 24.01.2003
(51) Int. Cl.: H04B 10/17, H01S 3/30

(54) **Wide band transmission system utilizing raman amplification**

(71) Applicant: Corning Incorporated, Corning, New York 14831 (US)
(72) Inventor: Hadjar, Yassine, 77350 Le Mee Sur Seine (FR); Traynor, Nicholas James, 77300 Fontainebleau (FR)
(74) Representative: Thévenet, Jean-Bruno

(57) **Abstract**

A distributed Raman amplifier (100) provides gain to signals in multiple wavelength bands and utilizes a plurality of Raman pumps (40a,40b,50a,50b, 40a'-40c'). The wavelengths of the Raman pumps are designated such that there is no overlap between pump wavelength of at least one signal band and another one of said multiple signal bands.

## Description

### BACKGROUND OF THE INVENTION

### FIELD OF THE INVENTION

The present invention relates generally to transmission systems utilizing Raman amplification at multiple signal bands.

### TECHNICAL BACKGROUND

A typical optical transmission system utilizes a plurality of discrete amplifiers situated between long lengths (more than 30 km) of transmission fiber. The discrete amplifiers are usually Erbium doped fiber amplifiers also referred to as EDFAs. The distance between the Erbium doped fiber amplifiers is often referred to as the "span length". Typical terrestrial span lengths are 50 to 120 kilometers. As the communication signal travels through the transmission fiber between two Erbium doped amplifiers, the signal attenuates and the Erbium doped amplifiers then boost up the intensity of the signal.

It has been known that an optical transmission system can utilize the distributed Raman fiber amplifiers in conjunction with Erbium doped fiber amplifiers. Distributed Raman fiber amplifiers utilize transmission fiber as their gain medium. When distributed Raman fiber amplifiers are utilized in conjunction with Erbium doped fiber amplifiers, the reach (i.e. the distance between receiver and transmitter) of an optical transmission system that utilizes C band (1530 nm to 1565 nm, ±10 nm) and L band (1570 nm to 1610 nm, ±10 nm) signals can be increased by a factor of two or more.

Raman amplification has become a viable commercial technology with demonstrations of wave division multiplexing (WDM). In such applications, typically referred to as Raman-assisted transmission, a pump light is launched into an optical fiber at amplifier sites in an opposite direction to that of the source signal or the signal being amplified. The amplification is distributed along the transmission fiber with the gain increasing exponentially near the output end of the transmission fiber.

Raman amplification occurs when higher-energy (that is, shorter wavelength) pump photons scatter off the vibrational modes of a material's lattice matrix, i.e. optical phonons, and coherently add to lower-energy (longer wavelengths) signal photons. Typically, a pump laser is used to provide pump radiation through a Raman medium to generate Stokes radiation in another wavelength range by Raman scattering which provides amplification of a source signal conducted through the Raman medium. A direct consequence of this is that Raman amplification can be realized at any wavelength in any optical fiber by correct choice of the wavelength of the optical pump.

Raman amplification is disclosed in U.S. Patent No. 5,959,750 to Eskildsen et al. for increasing transmission capacity. As discussed above, Raman, amplification occurs directly in the transmission fibers of the fiber optic transmission system itself. For a transmission system that relies entirely on Raman amplification, the need for rare-earth doped fibers is obviated. Thus, the use of Raman gain as taught by Eskildsen et al. facilitates the upgrade of a transmission system without significant cost. The use of distributed Raman amplification (in conjunction with discrete amplification) is referred to as distributed Raman-assisted transmission (D-RAT), and is implemented via counter-propagation (with respect to the signals) of pump light which, is shorter by approximately 100 nm than the signal wavelength band (for signals in approximately 1500 nm to 1600 nm range). In addition to lower system cost, D-RAT offers the benefit of lower accumulated Amplified Spontaneous Emission (ASE) noise build-up and lower launch power for decreased fiber nonlinearities. This is because ASE noise generated by the Raman amplifier suffers attenuation as the signal propagates through the optical fiber, and, therefore, even negative (expressed in dB) effective noise figures are possible. Thus, D-RAT acts as a low noise, pre-amplifier before each in-line EDFA in a long-haul transmission link to improve the transmission system's performance (as measured by Q) by several decibels (dB). The Q improvement results in increased system reach - i.e., beyond 1000 km and up to 3000 km, has immediate commercial applicability, and obviates the need for expensive electrical 3R regenerators. For the transmission systems utilizing C-band and L- band amplifiers the improved Q also results in ability to transmit higher bit rates and to have tighter channel spacings.

The gain performance of the Raman amplifier depends on various transmission fiber properties, such as the pump light absorption, the effective area of the fiber, and the Raman gain coefficient. Some of these factors make it very difficult to extend D-RAT to the S wavelength band (about 1470 nm to about 1525 nm, *±* 10nm). For example: (i) the water absorption peak is located at a wavelength of about 1380 nm and results in relatively high attenuation for the S-band Raman pumps; (ii) pump power transfer occurs between S-band pumps and C-band and L-band Raman pumps, which increases the effective attenuation of the S-band pumps and results in a degraded effective noise figure; (iii) the S-band signals and L-band pumps are located within the same wavelength range, causing potential cross-talk problems and increasing complexity by adding multiple guard bands (empty spectral band, used as a buffer) within the S-band.

Accordingly, there exists an unfulfilled need for upgrading optical signal bandwidth to the S-band in existing fiber optic transmission systems which provides a substantial increase in the data carrying capacity without the disadvantages of the prior art systems and methods.

### SUMMARY OF THE INVENTION

According to one aspect of the invention, a distributed Raman amplifier provides gain to signals in multiple wavelength bands, wherein signals in a short wavelength band act as the only Raman pumps for a longer wavelength band. According to one embodiment, the distributed Raman amplifier utilizes a plurality of Raman pumps. The wavelengths of the Raman pumps are designated such that there is no overlap between pump wavelength of at least one signal band and another one of the multiple signal bands.

According to one embodiment of the distributed Raman amplifier of the invention, at least one signal band has signal channels that act as Raman pumps for said another one of the multiple signal bands, and this another one of the multiple signal bands is characterized by wavelengths that are longer than that the wavelength of the at least one signal band. The another one of the multiple signal bands does not utilize a separate Raman pump. According to a further embodiment the at least one signal band is the S-band and the another one of the multiple signal bands is the L-band. According to onother embodiment the at least one signal band is the C-band and the another one of the multiple signal bands is the U-band.

In an embodiment of the present invention, a configuration of Raman pumps is utilized in an optical transmission system, wherein the wavelengths and powers of the Raman pumps are selected such that there is no overlap between pump wavelengths of at least one signal band and signal bandwidth of another, longer signal band separated from the one signal band by about 13THz.

One advantage of the present invention is that the Raman amplifier according to the present invention optimizes performance in a shorter band (S-band, for example) without compromising performance in the longer wavelength bands (for example, C and L-bands). This approach allows longer wavelength Raman pumps to be removed without reducing the wide band OSNR.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operations of the invention.

### BRIEF DESCRIPTION OF THE DRAWINGS

Figure 1 is a schematic view of a Raman amplifier for S, C and L band signals, that utilizes counter propagating Raman pumps;

Figure 2A is a graph of simulated gain G and simulated noise figure NF, versus wavelength for the Raman amplifier of Figure 1;

Figure 2B is a graph of simulated OSNR (optical signal to noise ratio) versus wavelength, for the Raman amplifier of Figure 1;

Figure 3. is a schematic view of the Raman amplifier for S, C and L band signals, according to the first embodiment of the present invention;

Figure 4A is a graph of simulated gain G and simulated noise figure NF, versus wavelength for the Raman amplifier of Figure 3;

Figure 4B is a graph of simulated OSNR versus wavelength, for the Raman amplifier of Figure 3;

Figure 5 is a schematic view of the Raman amplifier for C and L and U-band signals, according to the second embodiment of the present invention;

Figure 6 is a schematic view of the Raman amplifier for S, C and L band signals, according to the third embodiment of the present invention;

Figure 7A is a graph of simulated gain G and simulated noise figure NF, versus wavelength for the Raman amplifier of Figure 6;

Figure 7B is a graph of simulated OSNR versus wavelength, for the Raman amplifier of Figure 6;

Figure 8 is a schematic view of the Raman amplifier for S, C and L and U band signals, according to yet another embodiment of the present invention.

### DETAILED DESCRIPTION OF THE PREFERRED EMBODIMENTS

Reference will now be made in detail to the present embodiments of the invention, examples of which are illustrated in the accompanying drawings. Whenever possible, the same reference numerals will be used throughout the drawings to refer to the same or like parts.

Distributed Raman amplifiers that operate in only C and L-bands are known. Such distributed Raman amplifiers typically utilize optical pump light (injected into optical transmission fiber) which propagates counter to the signal light. These amplifiers utilize at least one optical pump for each of the signal wavelength bands. That is, in a Raman amplifier that amplifies C-band and L -band signals there are L- band pumps as well as C- band pumps. Because the pump light propagates counter to optical signal direction, the transfer of Relative Intensity Noise RIN (i.e., noise due to large fluctuation in pump output power over time) from Raman pumps to optical signals is reduced. That is, transfer of noise (RIN) from Raman pumps to optical signals is larger when the pump light and signal light propagate in the same direction.

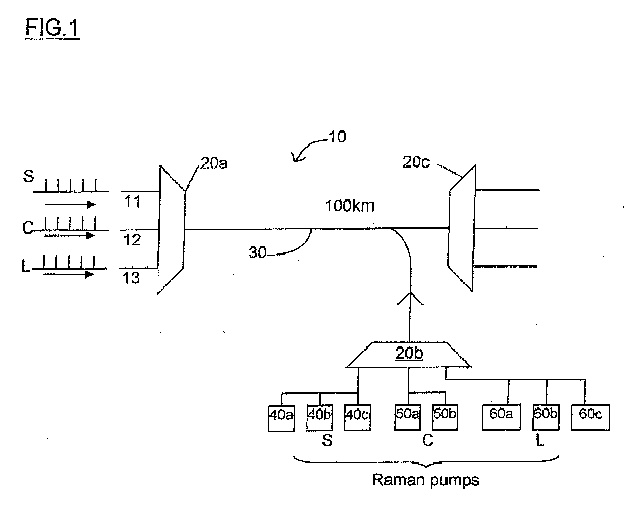

Applicants attempted to extend this approach to a Raman amplifier that amplifies signal in S-band as well in C and L-bands and utilizes S, C and L-band pumps. Such an exemplary Raman amplifier **10** utilizing a counter propagating pumping approach is shown in **Figure 1.** More specifically S, C and L- signal bands **11, 12, 13** are multiplexed by a wave division multiplexer **20A** and are injected into optical transmission fiber **30**. The amplified signals are provided to the demultiplexer **20c** and are separated into S, C, and L wavelength bands. In this example, the length of this fiber **30** is 100 km. Pump light from a plurality of Raman pumps **40a-40c, 50a-50b** and **60a-60b,** corresponding to S, C and L bands, respectively, is combined by another wave division multiplexer **20B** and is injected into the fiber **30** near the output end of the fiber **30.** Thus the signal propagates counter to the pump light direction. The S-band pumps **40a, 40b** and **40c** operate at 1390 nm, 1400 nm and 1415 nm and couple 600 mW, 200 mW and 200 mW of optical power into the optical fiber **30,** respectively. The C-band pumps **50a** and **50b** operate at 1430 nm and 1455 nm, respectively, with 200 mW of optical pump power coupled into the optical fiber **30** by each of these pumps. The L- band pumps **60a** and **60b** operate at 1479 nm and 1515 nm, respectively, with 100 mW of optical pump power coupled into the optical fiber **30** by each of these L-band pumps. The Raman amplifier **10** was modeled with a total of 46 signal channels per band (S, C and L) with signal power of 0 Dbm/channel injected into the fiber **30.**

In the configuration of Figure 1 there are three factors which degrade the system performance in the S-Band:
(i) Energy transfer between the signals via stimulated Raman scattering; that is, the energy is transferred from shorter wavelengths to the longer wavelengths. This effect becomes significant over long lengths of transmission fiber when the signal power is of the order of 0 dBm or greater. It is especially important in wide band transmission systems because the L band channels lie at the gain peak arising from the S band channels, resulting in strong energy transfer from short signal wavelengths to long signal wavelengths and increasing the effective transmission loss for the short wavelength channels (i.e. the S-Band channels).
(ii) Energy transfer from the S-Band Raman pumps to the C and L band Raman pumps, again via stimulated Raman scattering. This means that to achieve a flat Raman gain the injected power of the S-Band Raman pump has to be higher than that for the C and L band pumps, which generates higher noise for the S-band channels and a degraded Raman noise figure NF.
(iii) Proximity of L-band pump wavelengths to the signal wavelengths in S-Band channels. Each L-Band pump requires a wavelength guard band around it, which reduces the usable bandwidth in the S-band. (A guard band is a band of "buffer" wavelengths which are not used for signal transmission.)

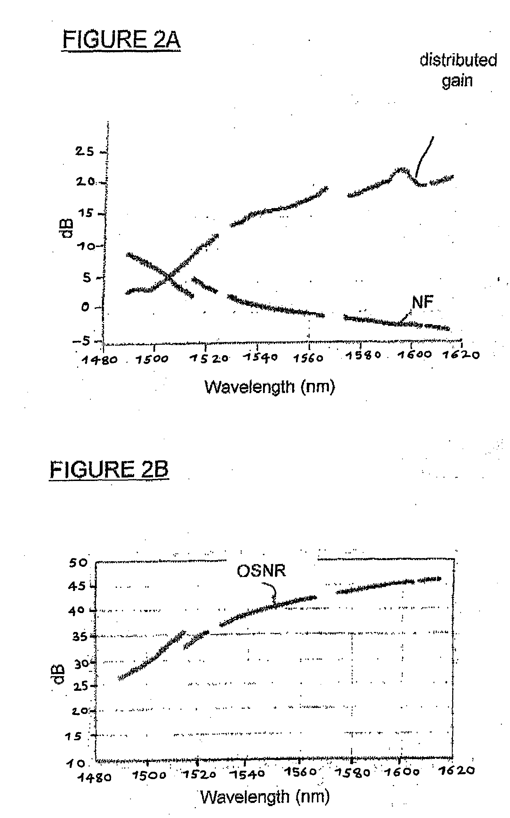

**Figures 2A** and **2B** illustrate the performance results obtained, via numerical simulations, for the Raman amplifier **10**. The effects of these factors degrade the transmission performance in the S-band.

More specifically **Figure 2A** is a graph of gain G and noise figure NF, versus wavelength and **Figure 2B** is a graph of OSNR (optical signal to noise ratio) versus wavelength, for the Raman amplifier **10.** These figures illustrate a higher level of NF and OSNR that occurs at the wavelength of 1515 nm and which is due to the presence of the 1515 nm L- band pump. It is also noted that the slopes of the gain, NF curve and OSNR curves are very steep for the signals in the 1500 nm ― 1520 nm wavelength range. The sloped gain curve indicates that it is difficult for the amplifier to provide a uniform level of gain across the S-band. That means that in the presence of uniform input power another amplifier in the transmission system needs to compensate for this gain tilt. The OSNR curve indicates that some of the channels have compromised OSNR due to noise accumulation, with lowest OSNR at about 25dB.

In order to alleviate the above describe problems the inventors designed an improved Raman amplifier. The improved Raman amplifier of this invention utilizes the signal in one signal band to efficiently pump a longer wavelength signal near the peak of Raman gain. The two signal bands are separated by about 13Thz. The wavelength region covered by the signal bands lies between 1300 nm and 1700 nm with the total signal waveband preferably being between 80 nm and 250 nm. The improved Raman amplifier utilizes Raman pumps with pump wavelengths which do not overlap at least one (shorter wavelength) signal band. In the following embodiments, the pump powers were chosen to provide enough optical pump energy to produce gain in at least two and, preferably, at least three signal band ranges; for example, S as well as C and L wavelength ranges.

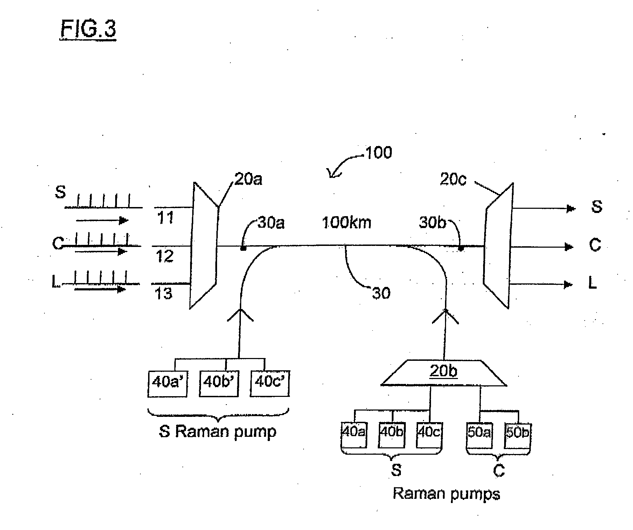

One exemplary embodiment of the Raman amplifier according to the present invention is shown in **Figure 3,** and is designated generally throughout by the reference numeral **100.** This Raman amplifier **100** operates in S, C and L signal bands, but utilizes only S-band pumps and C-band pumps.

More specifically, in this embodiment, S, C and L signal bands **11, 12, 13** are multiplexed by a wave division multiplexer **20A** and are injected into optical transmission fiber **30.** In this example, the length of this fiber **30** is also 100 km. However, a different length of fiber **30** may also be used. Pump light from plurality of Raman pumps **40a-40c** and **50a-50b,** corresponding to S and C-bands, respectively, is combined by another wave division multiplexer **20B** and is injected into the fiber **30** near the output end **30b** of the fiber **30.** Thus, the optical signals propagate counter to the multiplexed pump light direction. In addition, another optional set of S-band pumps **40a'-40c'** is provided near the input end **30a** of the fiber **30**. Thus, the pump light from these pumps **40a'-40c'** propagates co-directionally with the signal light. That is, this configuration utilizes bi-directional S-band pumping. The S-band pumps **40a, 40b** and **40c** operate at 1390 nm, 1400 nm and 1415 nm and couple 300 mW, 100 mW and 100 mW of optical pump power into the optical fiber **30,** respectively. The S-band pumps **40a', 40b'** and **40c'** also operate at 1390nm, 1400nm and 1415nm and also inject 300 mW, 100 mW and 100 mW of optical pump power into the optical fiber **30,** respectively. Preferably, optical pumps **40a', 40b'** and **40c'** are low noise pumps (i.e., optical pumps with RNI of less than ―130 dB/Hz). The C band pumps **50a** and **50b** operate at 1430 nm and 1455 nm, respectively and each C-band pumps injects 100 mW of optical pump power into the optical fiber **30.** The optical pumps **40a-40c, 40a'-40c'** and **50a, 50b** may be, for example, semiconductor laser diodes, Raman fiber lasers, or rare-earth doped fiber lasers. The Raman amplifier **100** was also modeled with a total of 46 signal channels per band (S, C and L) with signal power of 0 Dbm/channel injected into the fiber **30**.

Thus, in this embodiment, Raman amplification in S, C and L signal bands is achieved with direct pumping of only S and C signal bands. That is, although no direct L-band pumping was utilized by this amplifier, this Raman amplifier **100** achieves about 7dB of gain in the L-band. This approach removes the problems associated with the proximity of the S- band signal channels and the L-band Raman pump output, and also eliminates the strong transfer of pump power from the shorter wavelength pumps to the longer wavelength pumps (i.e., from S-band pumps to the L-band pumps). In this embodiment, the S-band signal channels also act as Raman pumps for the L-band signals. Furthermore, the S-band signal input power can be increased without risking signal degradation due to nonlinear effects, since a portion of optical power (about 50% or more) is quickly transferred to the L-band signals.

As stated above, the use of co-propagating S-band pump radiation (in addition to counter propagating S-band pump radiation) is preferred, but not required, and is utilized to further improve the performance of the S-band. Preferably, these pumps are low noise pumps and represent a relatively small number of total pumps utilized in the Raman amplifier.

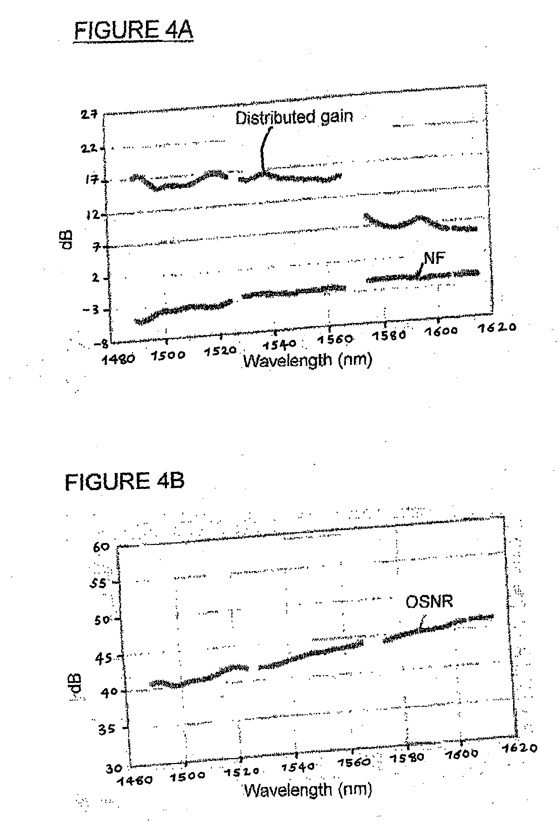

**Figures 4A** and **4B** illustrate the performance results obtained, via numerical simulations, for the Raman amplifier **100** depicted in **Figure 3.** More specifically **Figure 4A** is a graph of gain G and noise figure NF, versus wavelength and **Figure 4B** is a graph of OSNR, versus wavelength, for the Raman amplifier **100.** These figures illustrate that Raman amplifier **100** has better performance than the Raman amplifier **10**. For example, amplifier **100** has higher gain in S and L bands and still provides a good gain in the L band. In addition, the lumped NF is much smaller throughout S, C and L-band signal ranges. The OSNR is consistently high throughout S, C and L band signal ranges. It is noted that OSNR is about 40dB or higher, or about 15dB better than the worst OSNR shown in **Figure 2B.** Finally, because L-band pumps were not utilized, there is no "step feature" in NF and OSNR curve at about 1515nm. It is also noted that the NF and OSNR curves are substantially flat across the three signal bands - i.e., the slopes of the NF and OSNR curves of the Raman amplifier **100** are shallow when compared to those of the Raman amplifier **10.**

With respect to upgrading existing transmission systems towards the S band capacity, the L band channels could be turned off when the S-band is installed. Alternatively, a low cost ASE source could be implemented in a first system installation in order to mimic the S-band channels. This ASE source would be replaced by the S-band channels at the time of S-band installation.

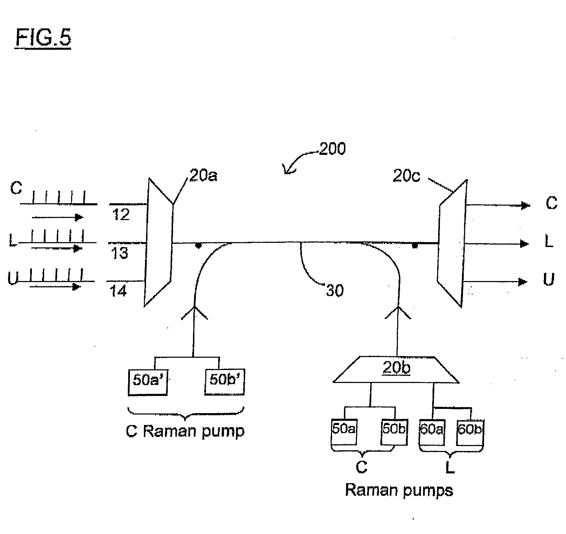

A Raman amplifier, similar to the above described Raman amplifier **100,** can be designed to operate in other wavelength bands. That is, applicants utilize the signal in one signal band to efficiently pump a longer wavelength signal near the peak of Raman gain (the frequency of the two signals being different by about 13 THz **(13THz ± 0.1 THz).** For example, a Raman amplifier may operate in C and U bands, or in C, L and U signal bands, with C-band signals **12** acting as pumps for the U signal band. (A U signal band includes wavelengths longer than 1620 nm). Accordingly, no U-band pumps are required. Such an amplifier **200** is illustrated in **Figure 5**, with the U band denoted by numeral **14**.

Alternatively, a Raman amplifier can be designed to operate simultaneously in S, C, L and U signal bands, with S-band signals acting as pumps for the L- signal band and C band signals acting as pumps for the U signal band. This configuration minimizes the need for separate L and U-band pumps. That is, the Raman amplifier will rely on C and L- band signals to pump longer wavelength bands (L and U) and will either not utilize L and U-band pumps at all, or utilize fewer (supplemental) L and/or U-band pumps, without reducing overall OSNR. The optical Raman pumps may be, for example, semiconductor laser diodes, Raman fiber lasers, or rare-earth doped fiber lasers.

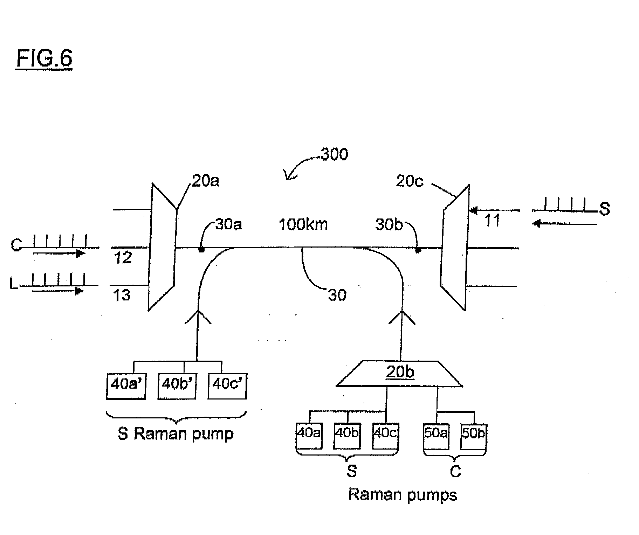

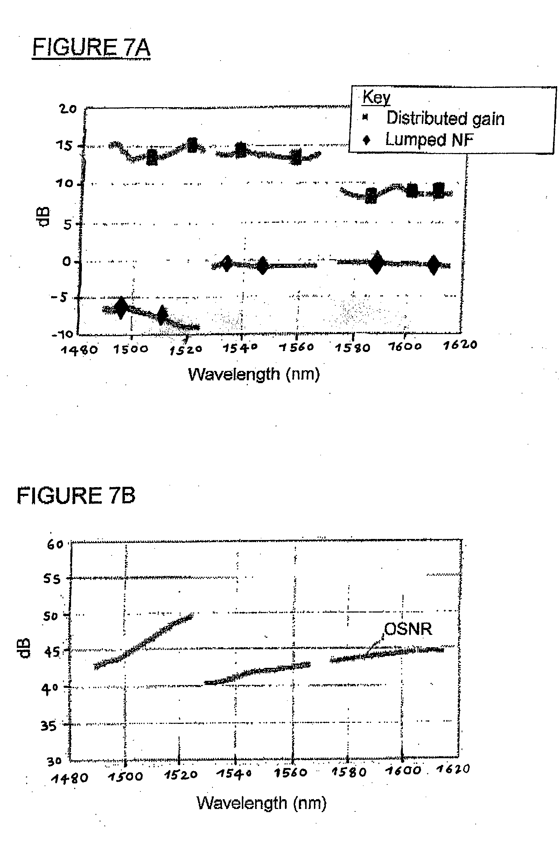

Another exemplary embodiment of the Raman amplifier according to the present invention is shown in **Figure 6**, and is designated generally throughout by the reference numeral **300.** This Raman amplifier **300** operates in S, C and L signal bands and utilizes only S and C-band pumps. **Figures 7A** and **7B** illustrate the performance results obtained, via numerical simulations, for the Raman amplifier **300** depicted in **Figure 6.** More specifically **Figure 7A** is a graph of gain G and noise figure NF, versus wavelength and **Figure 7B** is a graph of OSNR, versus wavelength, for the Raman amplifier **300**. **Figure 7A** illustrates that gain curves are relatively flat in each of the signal bands and **Figure 7B** illustrates that OSNR is consistently high throughout the signal ranges.

More specifically, in the embodiment of **Figure 6,** C and L signal bands **12, 13** are multiplexed by a wave division multiplexer **20A** and are injected into optical transmission fiber **30** near its input end **30a.** However the S band signal propagates in a direction opposite from that of the C and L band signals. That is, S band signals are injected near the output end **30B** of the fiber **30.** In this example, the length of this fiber **30** is also 100 km. However, a different length of fiber **30** may also be used. Pump light from plurality of Raman pumps **40a-40c** and **50a-50b,** corresponding to S and C, respectively, is combined by another wave division multiplexer **20B** and is injected into the fiber **30** near the output end **30b** of the fiber **30.** Thus, the optical signals from C and L bands propagate counter to the multiplexed pump light direction. In addition, as in the previous examples, another set of S band pumps **40a'-40c'** is provided near the input end **30a** of the fiber **30.** Thus, the pump light from these pumps **40a'-40c'** propagates co-directionally with the signal light from bands C and L. This configuration utilizes bi-directional S-band pumping. As described in the previous example, the S band pumps **40a, 40b** and **40c** operate at 1390 nm, 1400 nm and 1415 nm and inject 300 mW, 100 mW and 100mW of optical pump power into the optical fiber **30,** respectively. The S band pumps **40a', 40b'** and **40c'** also operate at 1390 m, 1400 nm and 1415 nm and also inject 300 mW, 100 mW and 100mW of optical pump power into the optical fiber **30.** The C band pumps **50a** and **50b** operate at 1430 nm and 1455 nm, respectively, with 100 mW of optical pump injected into the optical fiber **30** by each C-band pump. The Raman amplifier **300** was also modeled with a total of 46 signal channels per band (S, C and L) with signal power of 0 dBm/channel injected into the fiber **30.**

Thus, the Raman amplifier **300** achieves amplification in S, C and L signal bands with direct pumping of only S and C signal bands. Although no direct L-band pumps were utilized by this amplifier, this Raman amplifier achieves about 9 dB of gain in the L-signal band. (See **Figure 7A.)** In this embodiment, the S-band signal channels act as Raman pumps for the L-signal band. However, the added benefit in this embodiment is that the energy transfer between the S-band channels and the L band channels can be controlled better than in the previous embodiments. Although the S-band channels still provide gain for the L band channels, in Raman amplifier **300** the S band channels and L band channels have high power at different points in the fiber **30**, thus limiting the amount of power lost by the S-Band channels. For example, at the right hand side of **Figure 6** the S-band channels have high power and provide gain for the L- band channels. However, at this point the L band channels have relatively low power, and though they experience significant gain, they are not powerful enough to saturate that gain and draw significant power from the S-band channels.

As in a previous embodiment, co-propagating S-band pumps are low noise pumps and represent a small number of total pumps utilized in the Raman amplifier.

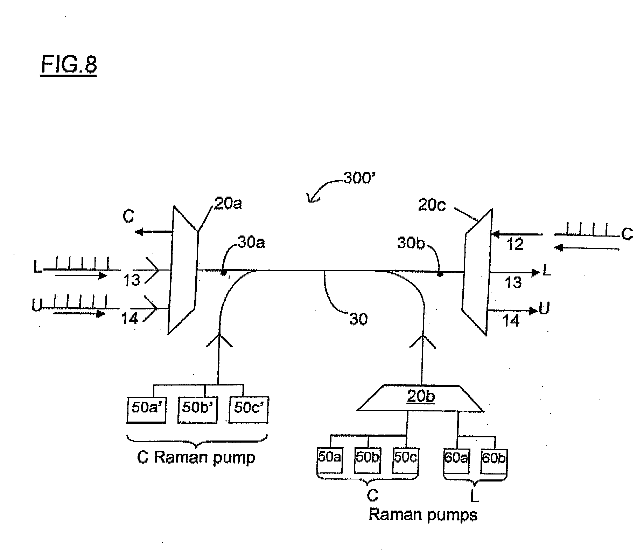

It is noted that a Raman amplifier similar to that of the amplifier **300** can be designed to operate in other wavelength bands. For example, a Raman amplifier 300' may operate in C, L and U signal bands, with the counter propagating C band signals acting as a pump for the U signal band. This configuration is illustrated in **Figure 8**. Alternatively, a Raman amplifier can be designed to operate in S, C, L and U signal bands, with S band signals acting as a pump for the L signal band and C band signals acting as a pump for the U signal band.

It will be apparent to those skilled in the art that various modifications and variations can be made to the present invention without departing from the scope of the invention as defined in the appended claims.

## Claims

1. A distributed Raman amplifier providing gain to optical signals in multiple wavelength bands, wherein signals in at least one wavelength band are utilized to pump a longer wavelength band, wherein said longer wavelength band does not utilize a separate optical pump.

2. A distributed Raman amplifier (100/200/300) providing gain to signals in multiple wavelength bands, wherein signals in a short wavelength band act as the only Raman pumps for a longer wavelength band.

3. A distributed Raman amplifier according to claim 1 or 2, said Raman amplifier utilizing a plurality of Raman pumps (40a,40b,50a,50b,40a'-40c'), wherein wavelengths of the Raman pumps are designated such that there is no overlap between pump wavelength of at least one wavelength band and another one of said multiple wavelength bands, said at least one wavelength band has signal channels that act as Raman pumps for said another one of said multiple wavelength bands, said another one of said multiple wavelength bands is **characterized by** wavelengths that are longer than that said at least one wavelength band, and wherein said another one of said multiple wavelength bands does not utilize a separate Raman pump.

4. A distributed Raman amplifier (100/200/300) providing gain to signals in multiple wavelength bands, said Raman amplifier utilizing a plurality of Raman pumps (40,50,60), wherein wavelengths of the Raman pumps are designated such that there is no overlap between pump wavelength of at least one signal wavelength band and another, shorter one of said multiple wavelength band, wherein said at least one signal wavelength band and said shorter one of said signal wavelength bands are separated by about 13 THZ.

5. The distributed Raman amplifier (200) of any previous claim, wherein signals of all channels propagate in the same direction.

6. The distributed Raman amplifier (300) of any one of claims 1 to 4, wherein said multiple wavelength bands include at least three wavelength bands and the shortest wavelength band counter-propagates with respect to the other wavelength bands.

7. The distributed Raman amplifier of claim 6, wherein said shortest wavelength band is S-band.

8. The distributed Raman amplifier of claim 3, wherein at least some of the Raman pumps (40a,40b,50a,50b,40a'-40c') are semiconductor laser diodes.

9. The distributed Raman amplifier of claim 3, wherein at least one of the Raman pumps (40a,40b,50a,50b,40a'-40c') is a Raman fiber laser.

10. The distributed Raman amplifier of claim 3, wherein at least one of the Raman pumps (40a,40b,50a,50b,40a'-40c') is a rare earth doped fiber laser.

11. A configuration of Raman pumps utilized in an optical transmission system, where the wavelengths and powers of the Raman pumps are selected such that there is no overlap between pump wavelengths of at least one signal band and signal bandwidth of another, longer signal band separated from said one signal band by about 13THz.
